(19) **Europäisches Patentamt**

**European Patent Office**

**Office européen des brevets**

(11) **EP 1 032 804 B1**

(12) **EUROPÄISCHE PATENTSCHRIFT**

(45) Veröffentlichungstag und Bekanntmachung des Hinweises auf die Patenterteilung:
**25.02.2004  Patentblatt 2004/09**

(51) Int Cl.⁷: $G01B\ 17/02$, G01N 29/22

(21) Anmeldenummer: **98962383.0**

(22) Anmeldetag: **13.11.1998**

(86) Internationale Anmeldenummer:
**PCT/EP1998/007515**

(87) Internationale Veröffentlichungsnummer:
**WO 1999/026040 (27.05.1999 Gazette 1999/21)**

(54) **EINRICHTUNG ZUR FEHLERERFASSUNG UND/ODER WANDDICKENMESSUNG BEI DURCHLAUFENDEN BÄNDERN ODER ROHREN AUS KUNSTSTOFF MIT ULTRASCHALLSIGNALEN**

DEVICE FOR DETECTING ERRORS AND/OR MEASURING WALL THICKNESS IN CONTINUOUS STRIPS OR TUBES MADE OF PLASTIC USING ULTRASONIC SIGNALS

DISPOSITIF POUR DETECTER DES ERREURS ET/OU POUR MESURER L'EPAISSEUR DE PAROIS DANS DES BANDES OU DE TUYAUX EN PLASTIQUE, AU MOYEN DE SIGNAUX ULTRASONORES

(84) Benannte Vertragsstaaten:
**AT CH DE DK FR GB IT LI NL**

(30) Priorität: **19.11.1997  DE 19751193**

(43) Veröffentlichungstag der Anmeldung:
**06.09.2000  Patentblatt 2000/36**

(73) Patentinhaber: **INOEX GmbH**
**32547 Bad Oeynhausen (DE)**

(72) Erfinder:
• **SCHULZE, Torsten**
**D-32549 Bad Oeynhausen (DE)**
• **KLOSE, Reinhard**
**D-31737 Rinteln (DE)**

(74) Vertreter: **COHAUSZ & FLORACK**
**Patent- und Rechtsanwälte**
**Bleichstrasse 14**
**40211 Düsseldorf (DE)**

(56) Entgegenhaltungen:
EP-A- 0 538 110    DE-A- 2 828 643
FR-A- 2 298 921    GB-A- 2 033 579
US-A- 3 778 757    US-A- 4 435 984

• PATENT ABSTRACTS OF JAPAN vol. 010, no. 102 (P-448), 18. April 1986 & JP 60 235055 A (SUMITOMO KINZOKU KOGYO KK), 21. November 1985
• PATENT ABSTRACTS OF JAPAN vol. 017, no. 095 (P-1493), 25. Februar 1993 & JP 04 291149 A (NKK CORP), 15. Oktober 1992
• PATENT ABSTRACTS OF JAPAN vol. 017, no. 495 (P-1608), 7. September 1993 & JP 05 126803 A (HITACHI CABLE LTD;OTHERS: 01), 21. Mai 1993

**Beschreibung**

Die Erfindung betrifft eine Einrichtung zur Fehlererfassung und/oder Wanddickenmessung bei durchlaufenden Bändern, Profilen oder Rohren aus Kunststoff mit Ultraschallsignalen, die zur lückenlosen Erfassung der Wand des Bandes, Profils oder Rohres von nebeneinander und quer zur Durchlaufrichtung des Bandes, Profils oder Rohres über die Breite des Bandes oder Profils beziehungsweise den Umfang des Rohres verteilten und stationär über der Oberfläche des Bandes, Profils oder Rohres angeordneten Meßköpfen senkrecht in den Kunststoff eingeleitet und deren reflektierte Signale von ihnen aufgenommen und einer Auswerteeinheit zugeführt werden.

Bei einer bekannten Einrichtung der eingangs genannten Art (JP-A-60 235 055) ist jeweils ein Meßkopf einer Seite eines polygonen Profils zugeordnet. Die einzelnen Meßköpfe werden nacheinander für das Aussenden eines Ultraschallsignales aktiviert. Die in und durch das zu untersuchende Profil gesandten und reflektierten Signale werden von den Meßköpfen mit Ausnahme des das Signal aussendenden Meßkopfes erfaßt. Auch wenn davon auszugehen ist, daß mit der bekannten Einrichtung eine lückenlose Erfassung des gesamten Querschnittes angestrebt wird, ist fraglich, ob dieses Ziel mit den die einzelnen Seiten des polygonalen Querschnittes des Profils nur teilweise abdeckenden Meßköpfen überhaupt zu erreichen ist. Über die Behandlung der empfangenen Signale unter Berücksichtigung der Schallausbreitung, Streuung und Brechung sind dem Stand der Technik keine konkreten Informationen zu entnehmen.

Ferner ist es bei Einrichtungen zur Fehlererfassung und/oder Wanddickenmessung von durchlaufenden Bändern oder Rohren bekannt (DE-A-2 828 643; EP-A-0 538 110; JP-A-5 126 803), über den Umfang des Rohres oder dergleichen eine Vielzahl von Meßköpfen verteilt anzuordnen, die zyklisch angesteuert werden.

Bei einer anderen bekannten Einrichtung der eingangs genannten Art (US-PS 4,740,146) für zylindrische Rohre, die der eingangs genannten Einrichtung ähnlich ist, sind einige wenige Meßköpfe mit verhältnismäßig großem gegenseitigen Abstand stationär um das Rohr herum angeordnet und erfassen auf diese Art und Weise die Rohrwand an nur wenigen sich in Durchlaufrichtung des Rohres erstreckenden Streifen. Eine solche Einrichtung zur Wanddickenmessung mag in der Regel ausreichen, weil Dickenschwankungen über den Umfang sich meist nicht auf schmale Längsstreifen beschränken, sondern sich über einen größeren Umfangsbereich erstrecken. Sofern die Dickenschwankungen aber von der Regel abweichen, ist keine fehlerfreie Wanddickenmessung gegeben. Für die Erfassung von Fehlern ist eine solche Einrichtung grundsätzlich nicht geeignet, weil Fehler häufig nur auf einen sehr kleinen Ort beschränkt sind.

Die Überprüfung der Rohrwand über ihren gesamten Umfang ist allerdings mit einer anderen bekannten Einrichtung (DE 40 33 443 A1) möglich, die einen über den gesamten Umfang des Rohres umlaufenden Meßkopf aufweist. Der Antrieb eines solchen Meßkopfes und seine Führung machen jedoch einen erheblichen mechanischen Aufwand erforderlich. Hinzu kommt, daß mit einem solchen Meßkopf das durchlaufende Rohr nur auf Spiralbahnen erfaßt werden kann. Somit kann es auch hier Bereiche geben, die nicht erfaßt werden.

Um ein Rohr vollflächig erfassen zu können, könnten Meßköpfe einen geschlossenen Ring bilden. Nachteilig ist bei einer solchen Einrichtung allerdings, daß sie eine Vielzahl von Meßköpfen erforderlich macht.

Um in einer Rohrwand Fehler und deren Orientierung feststellen zu können, ist eine Einrichtung zur Fehlererfassung bekannt (US 4,523,468), die mit zwei hintereinander angeordneten Gruppen von am Außenumfang des Rohres angeordneten Meßköpfen Ultraschallsignale in die Rohrwand einleitet und die an Fehlern reflektierte Signale empfängt. Dafür erzeugt die erste Gruppe axial in der Rohrwand sich ausbreitende Signale, während die zweite Gruppe in Umfangsrichtung sich ausbreitende Ultraschallsignale erzeugt. Unter Berücksichtigung der Position des ein Ultraschallsignal aussendenden Meßkopfes und der Position des das reflektierte Signal empfangenden Meßkopfes sowie der Laufzeit läßt sich eine Aussage über die Lage des Fehlers in der Rohrwand machen. Lage und Orientierung des Fehlers lassen sich durch mehrere derartige Messungen bestimmen. Um eine Vermischung der von den einzelnen Meßköpfen ausgesandten Ultraschallsignale bei den empfangenden Meßköpfen zu vermeiden, ist vorgesehen, daß die Meßköpfe nach einem Multiplexverfahren nacheinander angesteuert werden, so daß einem Ultraschallsignal aussendenden Meßkopf mehrere empfangende Meßköpfe jeweils zugeordnet sind.

Bei einer solchen Einrichtung zur Fehlererfassung, bei der die Meßköpfe der einen Gruppe nur axiale Ultraschallsignale aussenden und die andere Gruppe der Meßköpfe nur in Umfangsrichtung des Rohres sich ausbreitet und Ultraschallsignale aussendet, läßt sich die Wanddicke von Rohren und dergleichen nicht bestimmen. Da es bei dieser Einrichtung auch nur um die Erfassung von verhältnismäßig großen Fehlern und deren Orientierung im Rohr geht, spielt das Problem der vollflächigen Erfassung des Rohres mit nur auf einem verhältnismäßig kleinen Bereich wirksamen Meßköpfen keine Rolle.

Der Erfindung liegt die Aufgabe zugrunde, eine Einrichtung zur lückenlosen Erfassung der Wanddicke und/oder von Fehlern in Bändern, Profilen oder Rohren mit konvex gekrümmter Oberfläche zu schaffen.

Diese Aufgabe wird erfindungsgemäß bei einer Einrichtung der eingangs genannten Art dadurch gelöst, daß die Meßköpfe (A,B,C,D) unter Berücksichtigung der Schallausbreitung, Streuung und Brechung der reflektierten Signale an der konvex gekrümmten Oberfläche des Bandes, Profils oder Rohres derart angeordnet sind, daß die reflektierten Signale eines vom Sender eines jeden Meßkopfes (B) ausgesandten Signals von diesem Meßkopf (B) und von den zu seinen beiden Seiten benachbarten Meßköpfen (A,C) empfangen werden, wobei die reflektierten Signale für die benachbarten Meßköpfe (A,B,C) von ineinander geschachtelten Oberflächenbereichen (a,b,c,a',b',c') ausgehen. Nach einer Ausgestaltung der Erfindung ist vorgesehen, daß die Anzahl der Meßköpfe

$$N \geq \frac{\pi R}{S \tan \alpha}$$

der Durchmesser der Empfangsfläche eines jeden Meßkopfes

$$K \geq \frac{2\pi R}{NT}$$

und die Wellenlänge des Ultraschallsignals

$$\lambda \geq R \left( 1 - \cos \frac{360}{N\,T} \right)$$

mit

N = Anzahl der Meßköpfe;
R = äußerer Krümmungsradius der Oberfläche des Bandes, Profils oder Rohres;
S = Abstand des Meßkopfes von der gekrümmten Oberfläche;
$\alpha$ = Öffnungswinkel des Ultraschallsenders des Meßkopfes;
K = Durchmesser der Empfangsfläche eines jeden Meßkopfes und
T = Anzahl der Meßbereiche je Meßkopf
$\lambda$ = Wellenlänge des Ultraschallsignals

sind.

Während bei herkömmlichen Einrichtungen zur Fehlererfassung und/oder Wanddickenmessung mit nach dem Ultraschallimpulsechoverfahren arbeitenden Meßköpfen der Empfänger eines Meßkopfes nur das vom Sender dieses Meßkopfes ausgesandte und reflektierte Signal empfängt, nicht dagegen die an der gekrümmten Oberfläche gebrochenen und damit für die Messung "verlorenen" Signale, werden bei der Erfindung zusätzlich auch diese "verlorenen" Anteile des ausgesandten und reflektierten Ultraschallsignals für die Messung ausgenutzt, indem diese Signale von den Sensoren der benachbarten Meßköpfe empfangen werden. Dadurch wird es möglich, mit weniger Ultraschallmeßköpfen die gesamte Oberfläche des Meßobjektes lückenlos zu erfassen. Da somit das von einem Ultraschallmeßkopf ausgesandte Signal eine größere Fläche überstreicht, kommt man mit weniger Meßköpfen als bei herkömmlichen Einrichtungen aus.

Werden die erfindungsgemäßen Regeln für die Auslegung der Meßköpfe eingehalten, dann ergeben sich für die von den Ultraschallmeßköpfen ausgesandten und am zu prüfenden Rohr, Band reflektierten Ultraschallsignale ineinandergeschobene Glockenkurven für den Schalldruck benachbarter Meßköpfe. Durch die Auslegung der Meßköpfe müssen diese Glockenkurven so weit ineinander geschoben sein, daß bis zum Schnittpunkt der Glockenkurven der Schalldruck für die Auswertung von Echosignalen noch ausreichend groß ist. Bei der Bestimmung der Anzahl der Meßbereiche je Meßkopf ist zu berücksichtigen, daß Meßbereiche teilweise "gespiegelt" werden, indem zwischen zwei benachbarten Meßköpfen derselbe Meßbereich zunächst mit dem von dem einen Meßkopf ausgesandten und von dem anderen benachbarten Meßkopf empfangenen, reflektierten Signal und dann mit dem von dem anderen Meßkopf ausgesandten und von dem einen benachbarten Meßkopf empfangenen, reflektierten Signal erfaßt wird. Solche "gespiegelten" Meßbereiche, d.h. zweimal erfaßte, zählen nur einmal.

Grundsätzlich ist es möglich, daß die Oberfläche unter Berücksichtigung der nicht gebrochenen, reflektierten Signale und der gebrochenen, reflektierten Signale ohne Überlappung erfaßt wird. In diesem Fall kommt man mit der geringsten Anzahl von Meßköpfen pro Meßbereichseinheit aus. Man kann jedoch auch vorsehen, daß eine Überlappung stattfindet, so daß jeder Abschnitt nicht nur mit einem reflektierten Signal ohne Brechung, sondern auch mit einem gebrochenen, reflektierten Signal untersucht wird. Im letzeren Fall ergibt sich nämlich der Vorteil, daß mit den gebrochenen Signalen wegen ihres anderen Einfallswinkels Fehler erkannt werden, die mit einem ungebrochenen Signal kaum erkannt werden können.

Um die Verarbeitung der Signale zu erleichtern, kann vorgesehen sein, daß nicht alle Signale parallel der Auswerteeinheit zugeführt werden, sondern daß die Ansteuerung der Meßköpfe zyklisch erfolgt. Dabei können allerdings mehrere Zyklen parallel laufen.

Im folgenden wird die Erfindung anhand einer ein Ausführungsbeispiel darstellenden Zeichnung näher erläutert. Dabei ist zu berücksichtigen, daß die Darstellung nur modellhaften Charakter haben kann, weil der Strahlengang von Ultraschallsignalen physikalisch umfassend in einer Zeichnung nicht darstellbar ist.

Die Erfindung umfaßt zum einen Meßköpfe, die in bestimmter geometrischen Beziehung zu dem Meßobjekt, zum Beispiel einem Rohr angeordnet sind, und zum anderen die Ansteuer- und Auswerteeinheit. Die Ansteuer- und Auswerteeinheit ist in der Zeichnung nicht dargestellt. Die Ansteuereinheit steuert die Meßköpfe zyklisch derart an, daß ein Meßkopf aussendet und das reflektierte Signal empfängt und die beiden benachbarten Meßköpfe nur empfangen. Die Auswerteeinheit wertet die reflektierten empfangenen Signale unter Berücksichtigung der geometrischen Anordnung der Meßköpfe aus, insbesondere des natürlichen Schalldruckabfalls zu den Rändern des Signals. Die besondere Art der Auswertung ist nicht Gegenstand der Erfindung.

Die Zeichnungen zeigen die geometrischen Verhältnisse der lückenlosen Erfassung einer Rohrwand mittels nebeneinander angeordneter Meßköpfe unter Berücksichtigung der nicht gestreuten, reflektierten Ultraschallsignale und der gestreuten, reflektierten Ultraschallsignale. Unter "nicht gestreut" wird eine solche Reflexion mit Brechung verstanden, bei der das vom Meßkopf ausgesandte Signal auch von diesem Meßkopf empfangen werden kann, während unter "gestreut" eine solche Reflexion mit Brechung verstanden wird, bei der das vom Meßkopf ausgesandte Signal nicht von diesem Meßkopf, sondern nur von zu seinen Seiten angeordneten Meßköpfen empfangen werden kann.

Um ein hier nur halb gezeichnetes zylindrisches Rohr 1 sind im Kreis mit Abstand voneinander mehrere Ultraschallmeßköpfe A,B,C,D positioniert. Die Ultraschallmeßköpfe A,B,C,D, sind senkrecht auf das Rohr 1 gerichtet und mit einem Abstand S von der Oberfläche des Rohres angeordnet. Jeder Ultraschallmeßkopf A,B,C,D sendet Ultraschallsignale aus, die sich kegelförmig und nicht wie in der Zeichnung aus Gründen der einfacheren Darstellung ohne Öffnungswinkel ausbreiten. Für den Empfang der Eintritts- und Rückwandechos der Ultraschallsignale steht die Aufnahmefläche mit einem Durchmesser $K_S$ zur Verfügung.

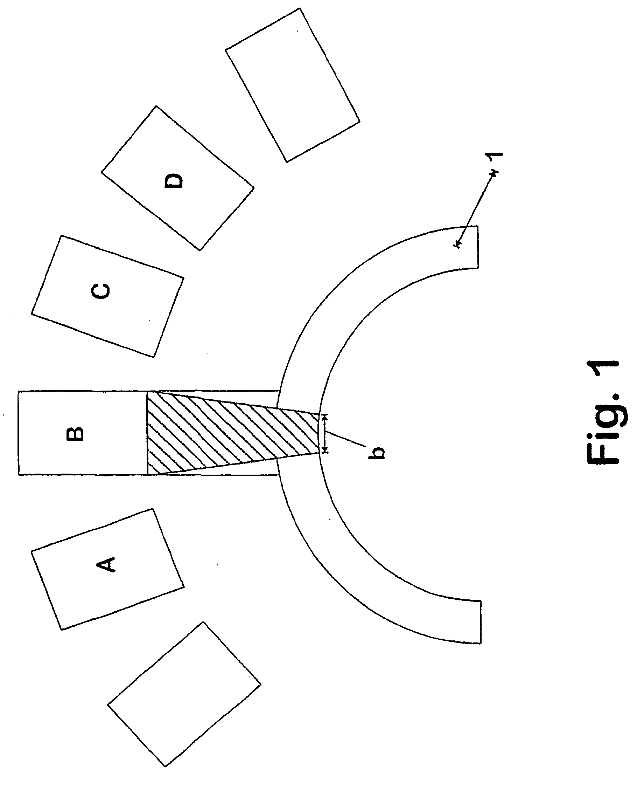

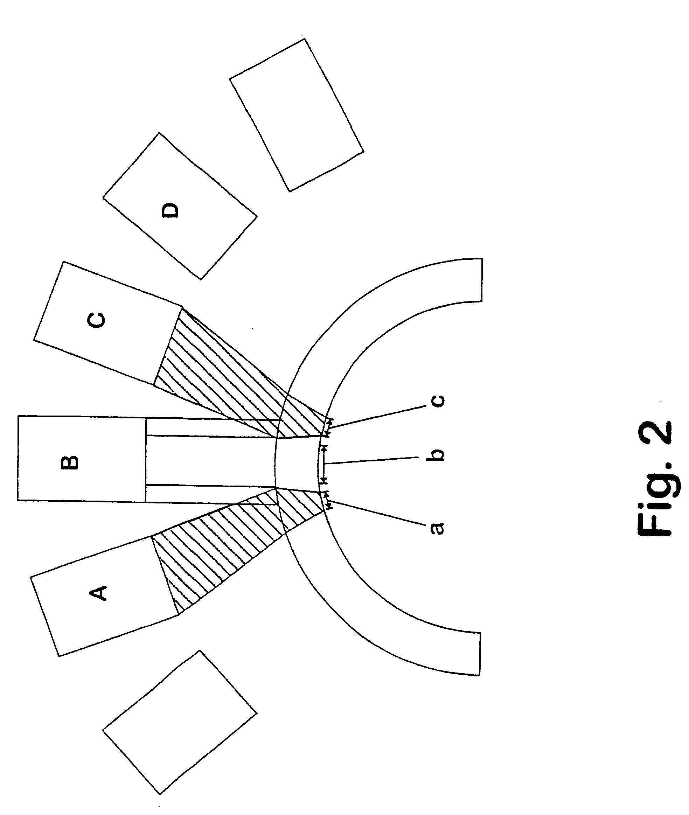

Die Ultraschallmeßköpfe A,B,C,D werden zyklisch angesteuert. Sofern der Ultraschallmeßkopf B zum Senden eines Ultraschallsignals angesteuert wird, wird von seinem Empfänger nur ein Teil des ausgesandten Signals, und zwar der nicht gestreute, reflektierte Teil, empfangen. Dieser Teil des Signals ist in Figur 1 schraffiert dargestellt. An der Rohrinnenwand 1 wird somit nur ein Bereich b direkt vom Meßkopf B erfaßt. Der restliche Teil wird an dem Rohr 1 gestreut und zu den Seiten reflektiert. Die Empfänger der benachbarten Meßköpfe A,C empfangen einen Teil dieser gestreuten, reflektierten Signale. Diese Signalanteile sind in Figur 2 schraffiert dargestellt. An der Rohrinnenwand decken diese Signale die Bereiche a und c ab. Wie Figur 2 zeigt, verbleiben nicht abgedeckte Bereiche zwischen a und b einerseits und b und c andererseits. Diese nicht abgedeckten Bereiche werden aber beim Senden eines Ultraschallsignals vom Meßkopf C abgedeckt.

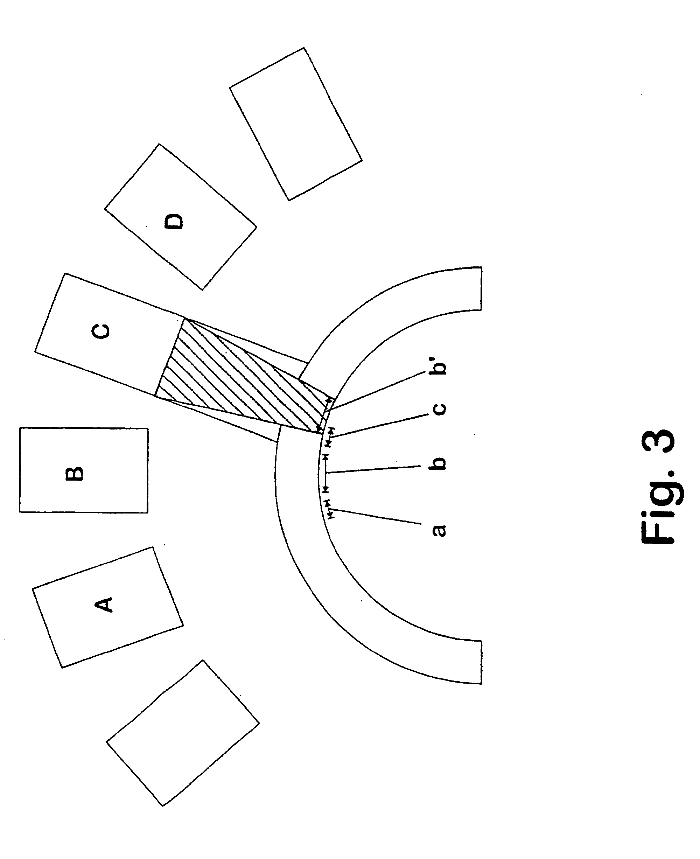

Wie Figur 3 zeigt, wird durch das vom Sender des Ultraschallmeßkopfes C ausgesandte nicht gestreute, reflektierte Signal an der Rohrinnenwand ein Bereich b' abgedeckt.

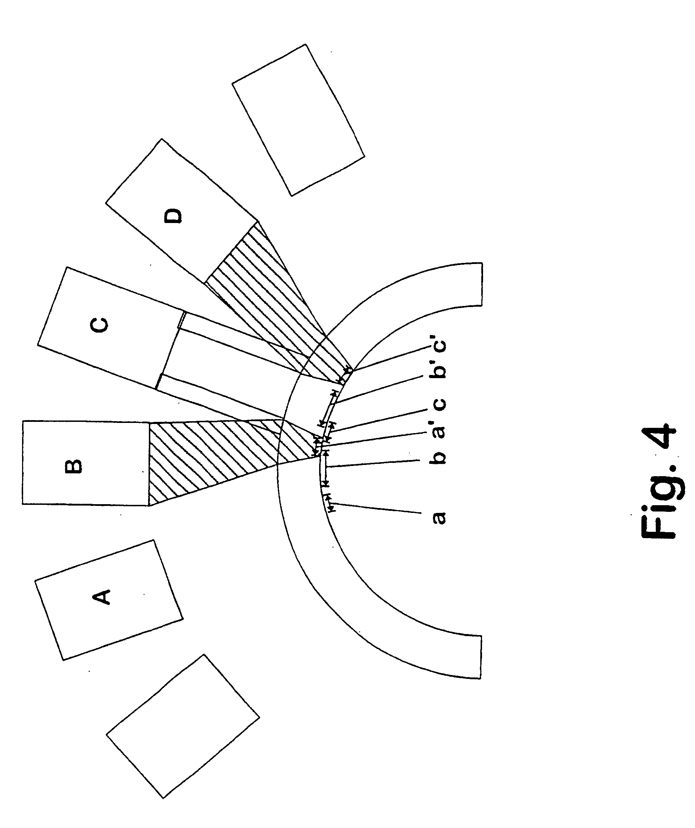

Wie Figur 4 zeigt, decken die gestreuten, reflektierten Signale des vom Sender des Ultraschallmeßkopfes C ausgesandten Ultraschallsignals an der Rohrinnenwand Bereiche a',c' ab. Der Bereich a' erfaßt also die Lücke zwischen den Bereichen b und c, die bei dem vom Sender des Ultraschallmeßkopfes B ausgesandten Signal noch nicht erfaßt waren.

Mit der erfindungsgemäßen Einrichtung ist es also mit vergleichsweise wenigen Meßköpfen A,B,C,D zum Senden und Empfangen von Ultraschallsignalen möglich, unter Ausnutzung auch des an der gekrümmten Oberfläche des Meßobjektes zur Seite weggebrochenen reflektierten Ultraschallsignals ein Rohr lückenlos zu erfassen. Die geringe Anzahl der Meßköpfe ermöglicht es, bei zyklischer Ansteuerung mit einer hohen Meßfolgefrequenz zu arbeiten, um eine vollständige Abdeckung des Meßobjektes auch in Längsrichtung zu erhalten. Zwar ist es möglich, ohne Überlappung der ohne Streuung und mit Streuung reflektierten Ultraschallsignale Messungen durchzuführen, um mit möglichst wenig Ultraschallmeßköpfen auszukommen, doch ist es auch möglich, die Wand des Meßobjektes sowohl mit ohne Streuung reflektierten Ultraschallsignalen als auch mit durch Streuung reflektierten Ultraschallsignalen zu untersuchen. Letzteres hat den zusätzlichen Effekt, daß wegen des anderen Einfallswinkels der gebrochenen Ultraschallsignale auch Fehler erkannt werden, die sonst schwer zu erkennen sind.

**Patentansprüche**

1. Einrichtung zur Fehlererfassung und/oder Wanddickenmessung bei durchlaufenden Bändern, Profilen oder Rohren aus Kunststoff mit Ultraschallsignalen, die von über die Breite des Bandes oder Profils beziehungsweise den Umfang des Rohres (1) verteilt und stationär über der konvex gekrümmten Oberfläche des Bandes, Profils oder Rohres angeordneten Meßköpfen (A,B,C,D) senkrecht in den Kunststoff eingeleitet und deren reflektierte Signale von ihnen aufgenommen und einer Auswerteeinheit zugeführt werden, **dadurch gekennzeichnet, daß** die Meßköpfe (A,B,C,D) nebeneinander und quer zur Durchlaufrichtung des Bandes, Profils oder Rohres (1) unter Berücksichtigung der Schallausbreitung, Streuung und Brechung der reflektierten Signale am Band, Profil oder Rohr derart angeordnet sind, daß sie die Wand des Bandes, Profils oder Rohres lückenlos erfassen, indem die am Band, Profil oder Rohr reflektierten Signale eines vom Sender eines jeden Meßkopfes (B) ausgesandten Signals von diesem Meßkopf (B) und von den zu seinen beiden Seiten benachbarten Meßköpfen (A, C) empfangen werden, wobei die Anzahl (N) der Meßköpfe (A,B,C)

$$N \geq \frac{\pi R}{S \tan \alpha}$$

der Durchmesser der Empfangsfläche eines jeden Meßkopfes

$$K \geq \frac{2\pi R}{NT}$$

und die Wellenlänge des Ultraschallsignals

$$\lambda \geq R\left(1 - \cos\frac{360}{N\,T}\right)$$

mit

N = Anzahl der Meßköpfe;
R = äußerer Krümmungsradius der Oberfläche des Bandes, Profils oder Rohres;
S = Abstand des Meßkopfes von der gekrümmten Oberfläche;
α = Öffnungswinkel des Ultraschallsenders des Meßkopfes;
K = Durchmesser der Empfangsfläche eines jeden Meßkopfes und
T = Anzahl der Meßbereiche je Meßkopf
λ = Wellenlänge des Ultraschallsignals

sind.

2. Einrichtung nach Anspruch 1, **dadurch gekennzeichnet, daß** die Meßköpfe (A, B,C,D) zyklisch angesteuert werden.

**Claims**

1. A device for detecting faults in and/or measuring the wall thickness of continuously moving strips, sections or tubes of plastics, using ultrasonic signals, which are introduced perpendicularly into the plastics from measuring heads (A, B, C, D) distributed over the width of the strip or section or the periphery of the tube (1), and fixed above the convexly curved surface of the strip, section or tube, their reflected signals being received by them and supplied to an evaluation unit, **characterised in that** the measuring heads (A, B, C, D) are so disposed one beside the other and transversely of the direction in which the strip, section or tube runs, allowing for the sonic propagation, scatter and refraction of the reflected signals, that they cover completely the wall of the strip, section or tube, wherein the reflected signals of a signal emitted by the transmitter of each measuring head (B) are received by said measuring head (B) and by the measuring heads (A, C) adjacent on both sides thereof, whereby the number (N) of the adjacent measuring heads (A, B, C) is

$$N \geq \frac{\pi R}{S \tan \alpha}$$

the diameter of the receiving of each measuring head is

$$K \geq \frac{2\pi R}{NT}$$

and the wavelength of the ultrasonic signal is

$$\lambda \geq R\ 1\text{-}\cos\frac{360}{NT}$$

where

N = number of measuring heads;
R = external radius of curvature of the surface of the strip, section or tube;
S = distance of the measuring head from the curved surface;
α = opening angle of the ultrasonic transmitter of the measuring heads;
K = diameter of the receiving surface of each measuring head and
T = number of measuring zones per measuring head;
λ = wavelength of the ultrasonic signal.

2. Device according to claim 1, **characterised in that** the measuring heads (A, B, C) are operated cyclically.

**Revendications**

1. Dispositif de détection de défauts et/ou de mesure de l'épaisseur de paroi dans le cas de bandes, de profilés ou de tubes en matière plastique, qui défilent, à l'aide de signaux ultrasonores, qui sont introduits dans la matière plastique par des têtes de mesure (A, B, C, D) réparties perpendiculairement sur la largeur de la bande ou du profilé ou sur la périphérie du tube (1) et disposées de façon stationnaire au-dessus de la surface cintrée convexe de la bande, du profilé ou du tube, et dont les signaux réfléchis sont reçus par ces têtes et envoyés à une unité d'évaluation, **caractérisé en ce que** les têtes de mesure (A, B, C, D) sont disposées côte-à-côte et transversalement par rapport à la direction de défilement de la bande, du profilé ou du tube (1) en tenant compte de la propagation du son, de la dispersion et de la réfraction des signaux réfléchis au niveau de la bande, du profilé ou du tube de telle sorte qu'ils détectent sans discontinuité la paroi de la bande, du profilé ou du tube par le fait que les signaux réfléchis sur la bande, le profilé ou le tube à partir d'un signal émis par l'émetteur de chaque tête de mesure (B) sont reçus par cette tête de mesure (B) et par les têtes de mesure (A, C), qui en sont voisines des deux côtés, le nombre (N) des têtes des mesure (A, B, C) est

$$N \geq \frac{\pi R}{S \, tg \, \alpha}$$

le diamètre de la surface de réception de chaque tête de mesure est

$$K \geq \frac{2\pi R}{NT}$$

et la longueur d'onde du signal ultrasonore est

$$\lambda \geq R \left( 1 - \cos \frac{360}{NT} \right)$$

avec

N = nombre des têtes de mesure;
R = rayon de courbure extérieur de la surface de la bande, du profilé ou du tube;
S = distance entre la tête de mesure et la surface cintrée;
α = angle d'ouverture de l'émetteur d'ultrasons de la tête de mesure;
K = diamètre de la surface de réception de chaque tête de mesure; et
T = nombre des plages de mesure pour chaque tête de mesure,
λ = longueur d'onde du signal ultrasonore.

2. Dispositif selon la revendication 1, **caractérisé en ce que** les têtes de mesure (A, B, C, D) sont commandées cycliquement.

Fig. 1

**Fig. 2**

EP 1 032 804 B1

Fig. 3

Fig. 4